(19) Europäisches Patentamt

European Patent Office

Office européen des brevets

(11) **EP 1 004 951 B1**

(12) **FASCICULE DE BREVET EUROPEEN**

(45) Date de publication et mention
de la délivrance du brevet:
**19.09.2001 Bulletin 2001/38**

(51) Int Cl.⁷: **G05D 1/06**

(21) Numéro de dépôt: **00102752.3**

(22) Date de dépôt: **13.11.1997**

(54) **Dispositif pour le pilotage en profondeur d'un aéronef**

Einrichtung zum Steuern der Höhe eines Flugzeuges

Device for altitude control of an airplane

(84) Etats contractants désignés:
**DE GB**

(30) Priorité: **02.12.1996 FR 9614736**

(43) Date de publication de la demande:
**31.05.2000 Bulletin 2000/22**

(62) Numéro(s) de document de la (des) demande(s)
initiale(s) en application de l'article 76 CBE:
**97402704.7 / 0 845 726**

(73) Titulaire: **AEROSPATIALE MATRA**
**75016 Paris (FR)**

(72) Inventeurs:
• **Larramendy, Panxika**
**31000 Toulouse (FR)**

• **Delgado, Daniel**
**31830 Plaisance du Touch (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 297 939        FR-A- 2 334 110**
**US-A- 3 814 912**

• **ZWEIFEL T: "OPTIMAL GUIDANCE DURING A
WINDSHEAR ENCOUNTER" SCIENTIFIC
HONEYWELLER, vol. 10, no. 1, 1 janvier 1989
(1989-01-01), pages 110-116, XP000142039
MINNEAPOLIS**

**Description**

La présente invention concerne un dispositif pour le pilotage en profondeur d'un aéronef, comportant un système de manche à la disposition du pilote et un système de commande de vol recevant les ordres de pilotage en profondeur venant dudit système de manche et engendrant les ordres de commande en profondeur adressés aux surfaces aérodynamiques de commande en profondeur.

L'objet de la présente invention est de permettre d'améliorer le pilotage en profondeur d'un aéronef, notamment pour éviter que les actions de pilotage se combinent avec des rafales de vent vertical pour soumettre l'aéronef à des facteurs de charges excessifs.

Les rafales de vent vertical concernées par la présente invention sont des turbulences tourbillonnaires (et non pas des turbulences à hautes fréquences sources de vibrations), engendrées par des rouleaux tourbillonnaires de type vortex, qui soumettent l'aéronef qui les traverse ou passe à leur périphérie, à une rafale de vent ascendant (ou descendant), puis à une rafale de vent descendant (ou ascendant) durant quelques secondes, ou bien à une succession de rafales de vent ascendant et descendant, dans le cas d'une pluralité de vortex.

Si l'aéronef est en vol de croisière en pilotage manuel et rencontre une telle rafale de vent ascendant, il est soumis, dans un premier temps, à un facteur de charge positif important, de sorte que le pilote réagit en commandant l'aéronef à piquer, afin de contrer l'effet du vent ascendant. Cependant, dans un deuxième temps, la rafale change de sens et le vent devient descendant, de sorte que maintenant l'action à piquer du pilote s'ajoute à la rafale de vent descendant pour appliquer à l'aéronef un facteur de charge négatif, encore plus élevé que celui qui résulterait de la rafale elle-même. Il peut donc en résulter des blessures pour les passagers et des détériorations pour l'aéronef.

Il en est de même si l'aéronef comporte un pilote automatique et si ce pilote automatique est engagé en vol de croisière, au moment de la rencontre avec la rafale de vent ascendant.

En effet, cette rafale a pour conséquence la déconnexion du pilote automatique et le passage en pilotage manuel, soit de façon automatique par action de dispositifs de protection (par exemple protection en incidence), soit par suite d'une action instinctive du pilote sur le manche. Là encore, l'action à piquer du pilote s'ajoutera à la rafale de vent inversée.

L'article de T. Zweifel dans Scientific Honeyweller, vol. 10 no. 1 janvier 1989, pages 110-116 : "Optimal Guidance During a Windshear Encounter" décrit un système pour piloter un aéronef en présence d'une rafale de vent ascendant puis descendant.

Bien entendu, ce qui a été décrit ci-dessus s'applique mutatis mutandis au cas de la rencontre d'une rafale de vent descendant, puis ascendant.

Ainsi, de ce qui précède, on comprendra aisément que, de façon générale, toute action de pilotage pour contrer une rafale de vent produit ses effets au moment de l'inversion de sens de ladite rafale, de sorte que cette action de pilotage accroît défavorablement le facteur de charge, déjà élevé, auquel ladite rafale soumet l'aéronef.

La présente invention a pour objet de remédier à cet inconvénient et d'améliorer le comportement et le pilotage de l'aéronef en présence de rafales de vent vertical.

A cette fin, selon l'invention, le dispositif pour le pilotage en profondeur d'un aéronef, comportant un système de manche à la disposition du pilote et un système de commande de vol en profondeur recevant les ordres de pilotage en profondeur venant dudit système de manche et engendrant les ordres de commande en profondeur pour les surfaces aérodynamiques de commande en profondeur, est remarquable en ce qu'il comporte :

- un système de commande de vol auxiliaire recevant lesdits ordres de pilotage en profondeur venant dudit système de manche et engendrant des ordres de pilotage en profondeur limités au moins en ce qui concerne les ordres à piquer ;
- un commutateur commandé disposé entre lesdits systèmes de commande, d'une part, et lesdites surfaces aérodynamiques de commande en profondeur, d'autre part, et pouvant adresser à celles-ci soit les ordres de commande en profondeur provenant dudit système de commande de vol, soit les ordres de commande en profondeur provenant dudit système de commande de vol auxiliaire ; et
- un dispositif de détection de rafales de vent vertical contrôlant ledit commutateur commandé pour que lesdits ordres de pilotage en profondeur limités soient adressés auxdites surfaces aérodynamiques pendant de telles rafales de vent vertical.

Ainsi, pendant les rafales de vent vertical, les ordres volontaires de pilotage en profondeur venant du pilote sont limités par le système de commande de vol auxiliaire, ce qui évite les inconvénients susmentionnés.

Dans un mode de réalisation avantageux du dispositif de pilotage conforme à la présente invention, ledit dispositif de détection de rafales de vent vertical comporte :

- des moyens de soustraction recevant la dérivée première par rapport au temps de l'incidence actuelle et la dérivée première par rapport au temps de l'attitude actuelle de l'aéronef et délivrant à leur sortie la valeur absolue de la différence entre lesdites dérivées ;
- des premiers moyens de comparaison pour comparer ladite valeur absolue à un seuil supérieur et pour délivrer un signal si ladite valeur absolue est supérieure audit seuil supérieur ;

- des deuxièmes moyens de comparaison pour comparer le nombre de Mach actuel de l'aéronef à un seuil de nombre de Mach et pour délivrer un signal si ledit nombre de Mach actuel est supérieur audit seuil de nombre de Mach ; et
- des premiers moyens logiques de type ET recevant, respectivement, à leurs entrées :

  . ledit signal résultant de la comparaison de ladite valeur absolue audit seuil supérieur ;
  . ledit signal résultant de la comparaison dudit nombre de Mach actuel audit seuil de nombre de Mach ; et
  . un signal représentatif du fait que les volets et les becs aérodynamiques dudit aéronef sont en configuration lisse,

  lesdits premiers moyens logiques délivrant à leur sortie un signal représentatif de la présence de rafales de vent vertical.

De plus, de préférence, ledit dispositif de détection de rafales de vent vertical comporte des moyens de dérivation recevant des signaux représentatifs de l'attitude actuelle et de l'incidence actuelle et délivrant à leur sortie lesdites dérivées premières.

Ainsi, dans le dispositif de pilotage conforme à la présente invention, ledit commutateur commandé est sous la dépendance d'un signal électrique représentatif des rafales de vent vertical, ledit signal étant obtenu de façon particulièrement simple, ne faisant intervenir que des paramètres disponibles à bord d'un aéronef, à savoir l'incidence, l'attitude, le nombre de Mach et la position des volets et becs aérodynamiques.

De préférence, dans ledit dispositif de pilotage conforme à la présente invention, le dispositif de détection comporte de plus :

- des troisièmes moyens de comparaison pour comparer ladite valeur absolue à un seuil inférieur audit seuil supérieur et pour délivrer un signal si ladite valeur absolue est inférieure audit seuil inférieur ; et
- des seconds moyens logiques interposés entre lesdits premiers moyens de comparaison et lesdits premiers moyens logiques, lesdits seconds moyens logiques recevant à leurs entrées lesdits signaux résultant des comparaisons de ladite valeur absolue avec lesdits seuils et délivrant auxdits seconds moyens logiques :

  . soit aucun signal, si ledit signal résultant de la comparaison de ladite valeur absolue audit seuil inférieur existe ;
  . soit ledit signal résultant de la comparaison de ladite valeur absolue audit seuil supérieur, tant que ladite valeur absolue est supérieure audit seuil inférieur.

Ainsi, on peut obtenir une information sur la fin d'une rafale. Un tel seuil inférieur peut être au moins approximativement égal à 0,5 degré d'angle par seconde.

Par ailleurs pour éviter que ledit signal électrique représentatif de la présence d'une rafale disparaisse immédiatement dès que ladite valeur absolue devient égale (en décroissant) audit seuil supérieur, lorsque ladite valeur absolue passe d'une valeur supérieure à une valeur inférieure audit seuil supérieur, lesdits seconds moyens logiques maintiennent ledit signal représentatif de la présence d'une rafale de vent vertical jusqu'à ce que ladite valeur absolue devienne inférieure audit seuil inférieur, pour autant que :

- ledit nombre de Mach actuel est supérieur audit seuil de nombre de Mach ; et
- les volets et becs aérodynamiques dudit aéronef sont en configuration lisse.

Ainsi, on obtient une confirmation de fin de rafale.

Pour ne pas détecter des vents instantanés non représentatifs de rafales, et notamment des bruits de mesure, il est avantageux que ledit dispositif de détection comporte des moyens pour filtrer ladite valeur absolue avant de la comparer audit seuil supérieur. Celui-ci, selon une autre particularité de la présente invention, peut être choisi au moins approximativement égal à 1 degré d'angle par seconde.

Afin d'éviter une génération intempestive dudit signal électrique représentatif de la présence d'une rafale de vent vertical et commandant ledit commutateur commandé, on prévoit des moyens pour subordonner cette génération au fait que ladite valeur absolue est supérieure audit seuil supérieur pendant au moins une première durée déterminée. Cette première durée déterminée peut avoir une valeur de l'ordre de 200 ms.

De plus, pour que la confirmation de fin de rafale soit encore plus grande, le maintien dudit signal électrique représentatif de la présence de rafale de vent vertical est subordonné au fait que ladite valeur absolue est inférieure audit seuil inférieur pendant au moins une seconde durée prédéterminée. Une telle seconde durée prédéterminée peut être de l'ordre de 1 seconde.

Les figures du dessin annexé feront bien comprendre comment l'invention peut être réalisée. Sur ces figures, des références identiques désignent des éléments semblables.

La figure 1 est un diagramme des vitesses d'un avion en vol.

La figure 2 est le schéma synoptique d'un mode de réalisation du dispositif pour la détection de rafales de vent vertical, incorporé dans le dispositif de pilotage conforme à la présente invention.

La figure 3 est le schéma synoptique d'un exemple de réalisation du dispositif pour le pilotage en profondeur d'un avion, conforme à la présente invention.

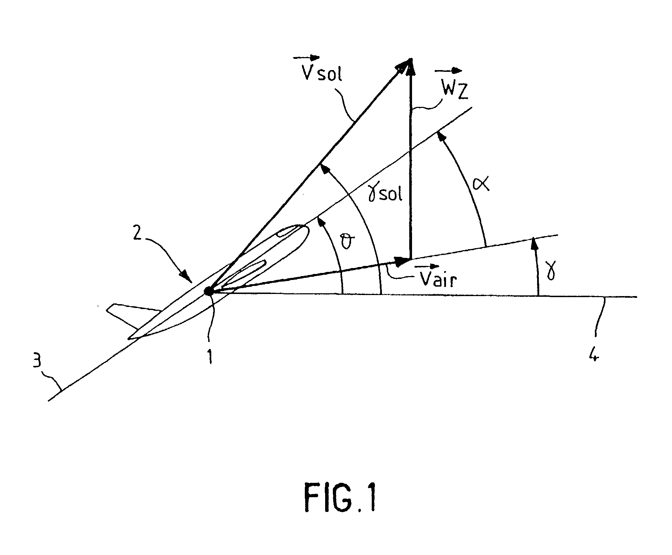

Sur la figure 1, on a représenté le diagramme des vitesses appliquées au centre de gravité 1 d'un avion 2, en vol de montée, rencontrant une rafale de vent vertical ascendant. Sur cette figure 1, l'axe longitudinal 3 de l'avion 2 est incliné de l'assiette θ par rapport à la ligne d'horizon 4 et présente l'incidence α par rapport à la vitesse aérodynamique $\overrightarrow{Vair}$ qui, elle-même, est inclinée de la pente aérodynamique γ par rapport à ladite ligne d'horizon 4. La vitesse $\overrightarrow{Wz}$ du vent vertical ascendant se combine avec ladite vitesse $\overrightarrow{Vair}$ pour composer la vitesse $\overrightarrow{Vsol}$ dudit avion 2 par rapport au sol, cette vitesse $\overrightarrow{Vsol}$ étant inclinée de la pente γsol par rapport à la ligne d'horizon 4.

On peut aisément constater que : γsol = γ + (Wz)/Vair, en appelant Wz et Vair, respectivement les longueurs des vecteurs $\overrightarrow{Wz}$ et $\overrightarrow{Vair}$.

Par ailleurs, γ = θ-α de sorte que

$$\gamma sol = \theta - \alpha + (Wz)/Vair.$$

Etant donné, comme expliqué ci-dessus, que l'on cherche, selon l'invention, à améliorer le comportement de l'avion en vol de croisière, on peut s'affranchir de la mesure de γsol et considérer que celle-ci est nulle. Par suite,

$$(Wz)/Vair = \alpha - \theta$$

Si l'on considère des variations de vent instantanées δ/δt(Wz/Vair), on voit qu'avec l'hypothèse faite ci-dessus, ces variations sont égales à $\dot{\alpha} - \dot{\theta}$, qui représente la différence entre les dérivées premières par rapport au temps de l'incidence actuelle α et de l'attitude actuelle θ de l'avion 2.

On détermine donc des variations de vent instantanées par mesure de ladite différence $\dot{\alpha} - \dot{\theta}$. Pour pouvoir détecter aussi bien les variations positives (ascendantes) que les variations négatives (descendantes) de vent instantanées, on mesure en réalité la valeur absolue $|\dot{\alpha} - \dot{\theta}|$ de ladite différence et on la compare à un seuil de détection de rafale Ss. Un tel seuil Ss est exprimé en degré d'angle par seconde et peut être par exemple égal au moins approximativement à 1°/s.

Ainsi, si $|\dot{\alpha}-\dot{\theta}|$ est supérieur à Ss, on considère que l'avion 2 est soumis à une rafale de vent vertical.

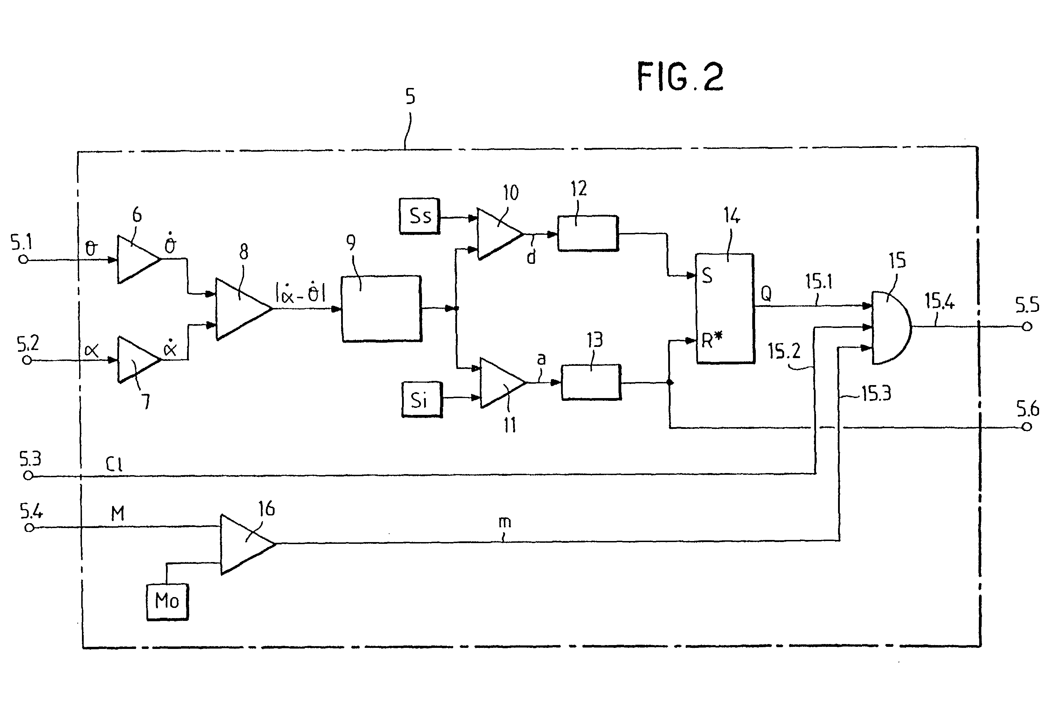

Sur la figure 2, on a représenté le schéma synoptique d'un détecteur 5 de rafales de vent vertical pour le dispositif de pilotage conforme à la présente invention. Ce détecteur 5 est monté à bord de l'avion 2 et il comporte quatre entrées 5.1 à 5.4 et deux sorties 5.5 et 5.6, l'entrée 5.6 n'étant pas nécessaire pour toutes les applications dudit détecteur.

Sur les entrées 5.1 et 5.2 sont respectivement appliquées l'attitude actuelle θ et l'incidence actuelle α de l'aéronef 2. Grâce à des différentiateurs 6 et 7, on obtient respectivement les dérivées premières par rapport au temps $\dot{\theta}$ et $\dot{\alpha}$ de l'attitude actuelle θ et de l'incidence actuelle α. Un soustracteur 8, auxquelles lesdites dérivées sont appliquées, permet d'en faire la différence et délivre à sa sortie la valeur absolue de celle-ci, soit $|\dot{\alpha} - \dot{\theta}|$. Afin d'éliminer les bruits de mesure et d'éviter de fausses détections de rafales de vent vertical, cette valeur absolue est transmise à un filtre 9.

A la sortie du filtre 9, la valeur absolue $|\dot{\alpha} - \dot{\theta}|$ filtrée est adressée à deux comparateurs 10 et 11. Dans le comparateur 10, ladite valeur absolue filtrée est comparée au seuil supérieur Ss, par exemple égal à 1°/s, tandis que, dans le comparateur 11, elle est comparée à un seuil inférieur Si, par exemple égal à 0,5°/s.

Si, et uniquement si, ladite valeur absolue filtrée est :

-    supérieure au seuil supérieur Ss, le comparateur 10 émet à sa sortie un signal d de détection de rafales de vent vertical ;
-    inférieure au seuil inférieur Si, le comparateur 11 émet à sa sortie un signal a d'absence de rafales de vent vertical.

Des moyens de comptage 12 et 13 mesurent la durée des signaux d et a et les adressent à une bascule 14, de type SR\*, s'ils durent suffisamment longtemps. Par exemple, le signal d est transmis à l'entrée S de la bascule 14, si sa durée est au moins égale à 200 ms, tandis que le signal a est transmis à l'entrée R\* de la bascule 14, si sa durée est au moins égale à 1s. La sortie Q de la bascule 14 est reliée à l'une des entrées 15.1 d'une porte 15, du type ET à trois entrées, dont la sortie 15.4 forme la sortie 5.5 du détecteur 5. L'autre sortie 5.6 dudit détecteur est reliée à l'entrée R\* de ladite bascule 14.

Sur l'entrée 5.3 du détecteur 5 est appliqué un signal cl, représentatif du fait que l'avion 2 est en configuration lisse, c'est-à-dire qu'aucun de ses volets ou becs n'est sorti. L'entrée 5.3 est reliée à l'entrée 15.2 de la porte 15.

Par ailleurs, l'entrée 5.4 du détecteur 5 reçoit le nombre de Mach actuel M de l'avion 2. Ce nombre de Mach actuel M est comparé, dans un comparateur 16, à un seuil de nombre de Mach Mo, par exemple égal à 0,53. La sortie du comparateur 16 est reliée à l'entrée 15.3 de la porte ET et n'adresse un signal m à celle-ci que si le nombre de Mach actuel M est supérieur au seuil Mo.

Le fonctionnement de l'exemple de réalisation du détecteur 5, montré par la figure 2, est le suivant :

A - Vol de croisière sans rafales de vent vertical

L'avion 2 étant en vol de croisière, sa configuration est lisse et son nombre de Mach est supérieur à Mo. Par suite, les entrées 15.2 et 15.3 de la porte ET sont alimentées.

Par ailleurs, puisqu'il n'existe pas de rafales de vent vertical, la valeur absolue $|\dot\alpha - \dot\theta|$, filtrée par le filtre 9, est inférieure au seuil Si, de sorte que le signal d n'existe pas et que le signal a, confirmé en durée par les moyens de comptage 13, est appliqué à l'entrée R* de la bascule 14 et à la sortie 5.6 du détecteur 5. Aucun signal n'apparaît donc à la sortie Q de la bascule 14.

Ainsi, dans ce cas, l'entrée 15.1 de la porte ET 15 n'est pas alimentée et aucun signal n'apparaît à la sortie 5.5 du détecteur 5.

B - Vol de croisière avec apparition d'une rafale de vent vertical

Si maintenant, une rafale de vent vertical apparaît, la valeur absolue filtrée $|\dot\alpha - \dot\theta|$ devient supérieure au seuil Ss, de sorte que le signal d, confirmé en durée par les moyens de comptage 12, est appliquée à l'entrée S de la bascule 14 et que le signal a disparaît. La sortie Q émet donc un signal de sortie qui est transmis à l'entrée 15.1 de la porte 15. Les deux autres entrées 15.2 et 15.3 étant alimentées comme décrit ci-dessus, la porte ET est passante et un signal de présence de rafale de vent vertical apparaît sur la sortie 5.5 du détecteur 5.

C - Vol de croisière avec disparition d'une rafale de vent vertical

Si la rafale de vent vertical disparaît :

- dans un premier temps, la valeur absolue filtrée $|\dot\alpha - \dot\theta|$ devient inférieure au seuil Ss, mais reste supérieure au seuil Si, de sorte que les signaux d et a sont tous les deux nuls. Il en résulte que la sortie Q reste inchangée et continue à émettre son signal de sortie et que, en conséquence, le signal de présence de rafale de vent vertical continue à être présent sur la sortie 5.5 du détecteur 5 ;
- dans un deuxième temps, la valeur absolue filtrée $|\dot\alpha - \dot\theta|$ devient inférieure au seuil Si, de sorte que le signal a apparaît et est appliqué à l'entrée R*. La porte 15 n'émet donc aucun signal à sa sortie Q et l'avion 2 reprend l'état qu'il avait antérieurement à l'apparition de la rafale de vent vertical.

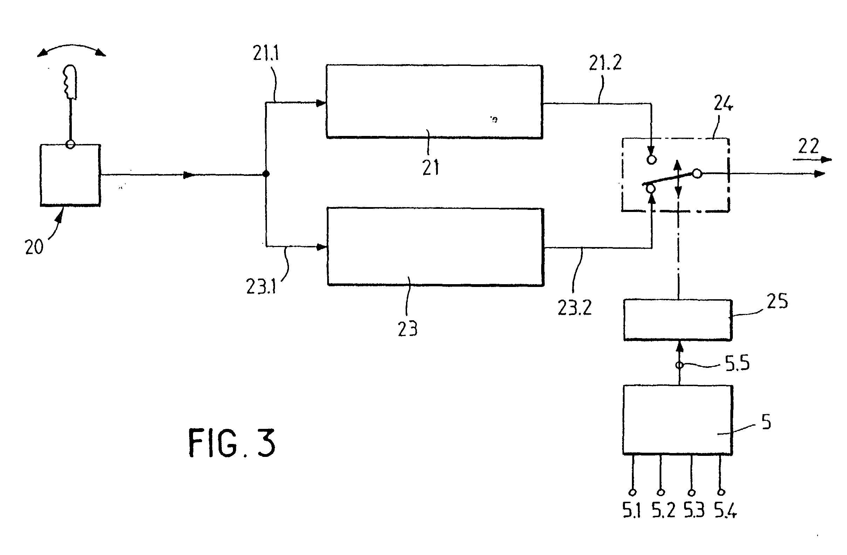

Sur la figure 3, on a représenté un dispositif selon l'invention pour le pilotage en profondeur de l'aéronef 2. Ce dispositif de pilotage comporte :

- un système de manche 20, à la disposition du pilote, pour engendrer des ordres de pilotage en profondeur, notamment des ordres à piquer ;
- un système de commande de vol principal 21 recevant, à son entrée 21.1, lesdits ordres de pilotage en profondeur venant dudit système 20 et engendrant, à sa sortie 21.2, des ordres de commande en profondeur pour des surfaces aérodynamiques 22 (non représentées en détail) de commande en profondeur ;
- un système de commande de vol auxiliaire 23 recevant, à son entrée 23.1 (tout comme le système de commande de vol principal 21), lesdits ordres de pilotage en profondeur venant dudit système de manche 20 et engendrant, à sa sortie 23.2, des ordres de pilotage en profondeur . limités au moins en ce qui concerne les ordres à piquer ;
- un commutateur commandé 24, disposé entre le système de commande de vol 21 et 23, d'une part, et lesdites surfaces aérodynamiques 22, d'autre part, ledit commutateur 24 pouvant relier, à celles-ci, soit la sortie 21.2, soit la sortie 23.2 ;
- le dispositif de détection 5 contrôlant ledit commutateur commandé 24 par sa sortie 5.5 ; et
- un dispositif de comptage 25, interposé entre le dispositif de détection 5 et le commutateur commandé 24.

Dans le système de commande de vol auxiliaire 23, l'autorité à piquer est réduite, de façon que l'action du pilote ne puisse participer à un accroissement excessif du facteur de charge appliqué à l'avion, en cas de rencontre d'une rafale de vent vertical.

Tant que le dispositif 5 ne détecte aucune rafale de vent vertical, les surfaces aérodynamiques 22 de profondeur sont actionnées, à travers le commutateur 24, par les ordres engendrés par le système principal 21 en correspondance avec les ordres qui résultent de l'actionnement du système de manche 20, actionné par le pilote.

Lorsqu'une rafale de vent vertical apparaît, le dispositif de détection 5 fait basculer le commutateur 24, de sorte que, maintenant, c'est le système auxiliaire 23 à autorité limitée qui, sous la commande du système de manche 20, actionne les surfaces aérodynamiques à piquer 22.

Si la rafale de vent vertical disparaît, le dispositif de détection 5 fait rebasculer le commutateur 24, de sorte que les surfaces aérodynamiques 22 sont de nouveau actionnées par le système principal 21.

Grâce au compteur 25, le processus ci-dessus peut être par exemple le suivant : lorsqu'une rafale est détectée depuis moins de 6 secondes, le système auxiliaire 23 est rendu actif pendant au moins 10 secondes. Si la rafale disparaît, le système principal 21 est rendu de nouveau actif, si la rafale a disparu depuis plus de 4 secondes et si le manche 20 n'est pas activé à piquer depuis plus d'une seconde, afin d'éviter toute discontinuité dans l'autorité au manche susceptible de favoriser le pompage piloté (aircraft pilot coupling).

Bien entendu, le processus ci-dessus n'est qu'un exemple parmi d'autres. De façon générale, la limitation des ordres de pilotage en profondeur engendrés par le système de commande de vol auxiliaire 23 doit être un compromis entre :

- réduire au maximum l'autorité à piquer pour réduire au maximum le risque de facteurs de charge excessifs ; et

- laisser au pilote une autorité à piquer suffisante pour lui permettre d'éviter un autre avion en atmosphère turbulente.

Bien que le système de vol auxiliaire 23 ait été représenté ci-dessus comme étant indépendant du système de vol principal, il va de soi qu'il pourrait faire partie de celui-ci.

## Revendications

1. Dispositif pour le pilotage en profondeur d'un aéronef, comportant un système de manche (20) à la disposition du pilote et un système de commande de vol en profondeur (21) recevant les ordres de pilotage en profondeur venant dudit système de manche (20) et engendrant les ordres de commande en profondeur pour les surfaces aérodynamiques de commande en profondeur (22), **caractérisé en ce qu'**il comporte :

   - un système de commande de vol auxiliaire (23) recevant lesdits ordres de pilotage en profondeur venant dudit système de manche (20) et engendrant des ordres de pilotage en profondeur limités au moins en ce qui concerne les ordres à piquer ;
   - un commutateur commandé (24) disposé entre lesdits systèmes de commande (21, 23), d'une part, et lesdites surfaces aérodynamiques de commande en profondeur (22), d'autre part, et pouvant adresser à celles-ci soit les ordres de commande en profondeur provenant dudit système de commande de vol (21), soit les ordres de commande en profondeur provenant dudit système de commande de vol auxiliaire (23) ; et
   - un dispositif (5) de détection de rafales de vent vertical contrôlant ledit commutateur commandé (24) pour que lesdits ordres de pilotage en profondeur limités soient adressés auxdites surfaces aérodynamiques pendant de telles rafales de vent vertical.

2. Dispositif de pilotage selon la revendication 1, **caractérisé en ce que** ledit dispositif (5) de détection de rafales de vent vertical comporte :

   - des moyens de soustraction (8) recevant la dérivée première ($\dot{\alpha}$) par rapport au temps de l'incidence actuelle ($\alpha$) et la dérivée première ($\dot{\theta}$) par rapport au temps de l'attitude actuelle ($\theta$) de l'aéronef et délivrant à leur sortie la valeur absolue $|\dot{\alpha} - \dot{\theta}|$ de la différence entre lesdites dérivées ;

   - des premiers moyens de comparaison (10) pour comparer ladite valeur absolue à un seuil supérieur (Ss) et pour délivrer un signal (d) si ladite valeur absolue est supérieure audit seuil supérieur (Ss) ;
   - des deuxièmes moyens de comparaison (16) pour comparer le nombre de Mach actuel de l'aéronef (M) à un seuil de nombre de Mach (Mo) et pour délivrer un signal (m) si ledit nombre de Mach actuel est supérieur audit seuil de nombre de Mach ; et
   - des premiers moyens logiques (15) de type ET recevant, respectivement, à leurs entrées :

      . ledit signal (d) résultant de la comparaison de ladite valeur absolue audit seuil supérieur ;
      . ledit signal (m) résultant de la comparaison dudit nombre de Mach actuel audit seuil de nombre de Mach (Mo) ; et
      . un signal (cl) représentatif du fait que les volets et les becs aérodynamiques dudit aéronef sont en configuration lisse,

   lesdits premiers moyens logiques (15) délivrant à leur sortie (15.4) un signal représentatif de la présence de rafales de vent vertical.

3. Dispositif de pilotage selon la revendication 2 **caractérisé en ce que** ledit dispositif de détection (5) comporte des moyens de dérivation (6, 7) recevant des signaux représentatifs de l'attitude actuelle ($\theta$) et de l'incidence actuelle ($\alpha$) et délivrant à leur sortie lesdites dérivées premières ($\dot{\alpha}$ et $\dot{\theta}$).

4. Dispositif de pilotage selon l'une des revendications 2 ou 3, **caractérisé en ce que** ledit dispositif de détection (5) comporte :

   - des troisièmes moyens de comparaison (11) pour comparer ladite valeur absolue à un seuil (Si) inférieur audit seuil supérieur (Ss) et pour délivrer un signal si ladite valeur absolue est inférieure audit seuil inférieur (Si) ; et
   - des seconds moyens logiques (14) interposés entre lesdits premiers moyens de comparaison (10) et lesdits premiers moyens logiques (15), lesdits seconds moyens logiques (14) recevant à leurs entrées lesdits signaux (d) et (a) résultant des comparaisons de ladite valeur absolue avec lesdits seuils et délivrant auxdits seconds moyens logiques (15) :

      . soit aucun signal, si ledit signal (a) résultant de la comparaison de ladite valeur absolue audit seuil inférieur existe ;
      . soit ledit signal (d) résultant de la comparaison de ladite valeur absolue audit seuil supérieur, tant que ladite valeur absolue $|\dot{\alpha} - \dot{\theta}|$ est supérieure audit seuil inférieur (Si).

5. Dispositif de pilotage selon la revendication 4, **caractérisé en ce que**, lorsque ladite valeur absolue passe d'une valeur supérieure à une valeur inférieure audit seuil supérieur (Ss), lesdits seconds moyens logiques (14) maintiennent ledit signal représentatif de la présence d'une rafale de vent vertical jusqu'à ce que ladite valeur absolue devienne inférieure audit seuil inférieur (Si), pour autant que :

   - ledit nombre de Mach actuel est supérieur audit seuil de nombre de Mach ; et
   - les volets et becs aérodynamiques dudit aéronef sont en configuration lisse.

6. Dispositif de pilotage selon l'une quelconque des revendications 1 à 5, **caractérisé en ce que** ledit dispositif de détection (5) comporte des moyens (9) pour filtrer ladite valeur absolue $|\dot{\alpha} - \dot{\theta}|$.

7. Dispositif de pilotage selon l'une quelconque des revendications 1 à 6, **caractérisé en ce que** ledit seuil supérieur (Ss) est au moins approximativement égal à 1°/s.

8. Dispositif de pilotage selon l'une quelconque des revendications 4 à 6, **caractérisé en ce que** ledit seuil inférieur (Si) est au moins approximativement égal à 0,5°/s.

9. Dispositif de pilotage selon l'une des revendications 1 à 8, **caractérisé en ce que** des moyens (12) subordonnent la génération dudit signal électrique de présence de rafales de vent vertical au fait que ladite valeur absolue est supérieure audit seuil supérieur pendant au moins une première durée déterminée.

10. Dispositif de pilotage selon l'une des revendications 4 à 9, **caractérisé en ce que** des moyens (13) subordonnent le maintien dudit signal électrique représentatif de la présence d'une rafale de vent vertical au fait que ladite valeur absolue est inférieure audit seuil inférieur pendant au moins une seconde durée prédéterminée.

**Patentansprüche**

1. Einrichtung zum Steuern der Höhe eines Flugzeugs, die ein Steuerknüppelsystem (20) für den Piloten und ein Flughöhensteuerungssystem (21) umfasst, das die Höhenansteuerungsbefehle erhält, die vom genannten Steuerknüppelsystem (20) kommen, und die Höhensteuerungsbefehle für die aerodynamischen Höhensteuerungsflächen (22) erzeugt, **dadurch gekennzeichnet, dass** sie folgendes umfasst:

   - ein Flugsteuerungshilfssystem (23), das die genannten Höhenansteuerungsbefehle erhält, die von dem genannten Steuerknüppelsystem (20) kommen, und Höhenansteuerungsbefehle erzeugt, die zumindest was die Sturzflugbefehle angeht, begrenzt sind;
   - ein gesteuerter Umschalter, der zwischen den genannten Steuerungssystemen (21, 23) zum einen und den genannten aerodynamischen Höhensteuerungsflächen (22) zum anderen angeordnet ist und der an diese die vom genannten Flugsteuerungssystem (21) kommenden Höhensteuerungsbefehle oder die vom genannten Flugsteuerungshilfssystem (23) kommenden Höhensteuerungsbefehle richten kann; und
   - eine Vorrichtung (5) zur Ortung vertikaler Windböen, die den genannten gesteuerten Umschalter (24) überwacht, damit die genannten begrenzten Höhenansteuerungsbefehle während solcher vertikaler Windböen an die genannten aerodynamischen Flächen gerichtet werden.

2. Steuerungseinrichtung nach Anspruch 1, **dadurch gekennzeichnet, dass** die genannte Vorrichtung (5) zur Ortung von vertikalen Windböen folgendes umfasst:

   - Subtraktionsmittel (8), in die erste Ableitung ($\dot{\alpha}$) in Bezug auf die Zeit des aktuellen Anstellwinkels ($\alpha$) und die erste Ableitung ($\dot{\theta}$) in Bezug auf die Zeit der aktuellen Fluglage ($\theta$) des Flugzeugs eingegeben wird und die an ihrem Ausgang den Absolutwert $|\dot{\alpha} - \dot{\theta}|$ der Differenz zwischen den genannten Ableitungen liefern;
   - erste Vergleichsmittel (10), um den genannten Absolutwert mit einem oberen Schwellenwert (Ss) zu vergleichen und ein Signal (d) zu liefern, wenn der genannte Absolutwert größer ist als der genannte obere Schwellenwert (Ss);
   - zweite Vergleichsmittel (16), um die aktuelle Machzahl des Flugzeugs (M) mit einem Machzahl-Schwellenwert (Mo) zu vergleichen und ein Signal (m) zu liefern, wenn die genannte aktuelle Machzahl größer ist als der genannte obere Machzahl-Schwellenwert; und
   - erste Logikmittel (15) des Typs UND, die an ihren Eingängen jeweils folgendes erhalten:

     • das genannte, sich aus dem Vergleich des genannten Absolutwerts mit dem oberen Schwellenwert ergebende Signal (d);

- das genannte, sich aus dem Vergleich der genannten aktuellen Machzahl mit dem genannten Machzahl-Schwellenwert (Mo) ergebende Signal (m); und
- ein Signal (cl), das repräsentativ ist, da die aerodynamischen Klappen und Schnäbel des genannten Flugzeugs eine glatte Konfiguration besitzen,

wobei die genannten ersten Logikmittel (15) an ihrem Ausgang (15.4) ein Signal liefern, das repräsentativ für das Vorhandensein vertikaler Windböen ist.

3. Steuerungseinrichtung nach Anspruch 2, **dadurch gekennzeichnet, dass** die genannte Ortungsvorrichtung (5) Ableitungsmittel (6, 7) umfasst, die Signale erhalten, die repräsentativ für die aktuelle Fluglage ($\theta$) und den aktuellen Anstellwinkel ($\alpha$) sind, und an ihrem Ausgang die genannten ersten Ableitungen ($\dot{\alpha}$ und $\dot{\theta}$) liefern.

4. Steuerungseinrichtung nach einem der Ansprüche 2 oder 3, **dadurch gekennzeichnet, dass** die genannte Ortungsvorrichtung (5) folgendes umfasst:

- dritte Vergleichsmittel (11), um den genannten Absolutwert mit einem Schwellenwert (Si) zu vergleichen, der kleiner ist als der genannte obere Schwellenwert (Ss), und um ein Signal zu liefern, wenn der genannte Absolutwert kleiner ist als der genannte untere Schwellenwert (Si);

und

- zweite, zwischen den genannten ersten Vergleichsmitteln (10) und den genannten ersten Logikmitteln (15) eingefügte Logikmittel (14), wobei die genannten zweiten Logikmittel (14) an ihren Eingängen die genannten Signale (d) und (a) erhalten, die sich aus den Vergleichen des genannten Absolutwerts mit den genannten Schwellenwerten ergeben und die den genannten zweiten Logikmitteln (15)

  - entweder kein Signal tiefem, wenn das sich aus dem Vergleich des genannten Absolutwertes mit dem genannten unteren Schwellenwert ergebende Signal (a) existiert;
  - oder das sich aus dem Vergleich des genannten Absolutwertes mit dem genannten oberen Schwellenwert ergebende Signal (d), insofem als der genannte Abso-

lutwert $|\dot{\alpha} - \dot{\theta}|$ größer ist als der genannte untere Schwellenwert.

5. Steuerungseinrichtung nach Anspruch 4, **dadurch gekennzeichnet, dass**, wenn der genannte Absolutwert am genannten oberen Schwellenwert (Ss) von einem höheren Wert zu einem niedrigen Wert übergeht, die genannten zweiten Logikmittel (14) das genannte Signal, das repräsentativ für das Vorhandensein einer vertikalen Windbö ist, hatten bis der genannte Absolutwert unter den genannten unteren Schwellenwert (Si) absinkt, insofern

- die genannte aktuelle Machzahl größer ist als der Machzahl-Schwellenwert; und
- die aerodynamischen Klappen und Schnäbel des genannten Flugzeugs eine glatte Konfiguration besitzen.

6. Steuerungseinrichtung nach einem beliebigen der Ansprüche 1 bis 5, **dadurch gekennzeichnet, dass** die genannte Ortungsvorrichtung (5) Mittel (9) zum Filtern des genannten Absolutwerts $|\dot{\alpha} - \dot{\theta}|$ umfasst.

7. Steuerungseinrichtung nach einem beliebigen der Ansprüche 1 bis 6, **dadurch gekennzeichnet, dass** der genannte obere Schwellenwert (Ss) annähemd gleich 1 °/s ist.

8. Steuerungseinrichtung nach einem beliebigen der Ansprüche 4 bis 6, **dadurch gekennzeichnet, dass** der genannte untere Schwellenwert (Si) zumindest annähemd gleich 0,5 °/s ist.

9. Steuerungseinrichtung nach einem der Ansprüche 1 bis 8, **dadurch gekennzeichnet, dass** Mittel (12) die Erzeugung des genannten elektrischen Signals für das Vorhandensein von vertikalen Windböen davon abhängig machen, dass der genannte Absolutwert zumindest während einer ersten bestimmten Dauer größer ist als der genannte obere Schwellenwert.

10. Steuerungseinrichtung nach einem der Ansprüche 4 bis 9, **dadurch gekennzeichnet, dass** Mittel (13) das Halten des genannten elektrischen Signals, das repräsentativ für das Vorhandensein einer vertikalen Windbö ist, davon abhängig machen, dass der genannte Absolutwert mindestens über eine zweite vorbestimmte Dauer kleiner ist als der genannte untere Schwellenwert.

## Claims

1. Device for the pitch operation of an aircraft, comprising a stick system (20) available to the pilot and a pitch flight control system (21) receiving the pitch operating commands coming from the said stick system (20) and generating the pitch control commands for the pitch control aerodynamic surfaces (22),
   **characterized in that** it comprises:

   - an auxiliary flight control system (23) receiving the said pitch operating commands coming from the said stick system (20) and generating pitch operating commands which are limited at least as regards the nose-down commands;
   - a controlled switch (24) disposed between the said control systems (21, 23), on the one hand, and the said pitch control aerodynamic surfaces (22), on the other hand, and able to address to the latter either the pitch control commands originating from the said flight control system (21), or the pitch control commands originating from the said auxiliary flight control system (23); and
   - a device (5) for detecting vertical wind gusts overseeing the said controlled switch (24) so that the said limited pitch operating commands are addressed to the said aerodynamic surfaces during such vertical wind gusts.

2. Operating device according to Claim 1, **characterized in that** the said device (5) for detecting vertical wind gusts comprises:

   - subtraction means (8) receiving the first derivative ($\dot{\alpha}$) with a respect to time of the current angle of attack ($\alpha$) and the first derivative ($\dot{\theta}$) with respect to time of the current attitude ($\theta$) of the aircraft and delivering at their output the absolute value $|\dot{\alpha}-\dot{\theta}|$ of the difference between the said derivatives;
   - first comparison means (10) for comparing the said absolute value with a higher threshold (Ss) and for delivering a signal (d) if the said absolute value is higher than the said higher threshold (Ss);
   - second comparison means (16) for comparing the current Mach number of the aircraft (M) with a Mach number threshold (Mo) and for delivering a signal (m) if the said current Mach number is higher than the said Mach number threshold; and
   - first logic means (15) of AND type receiving, respectively, at their inputs:

     . the said signal (d) resulting from the comparison of the said absolute value with the said higher threshold;
     . the said signal (m) resulting from the comparison of the said current Mach number with the said Mach number threshold (Mo); and
     . a signal (cl) representative of the fact that the aerodynamic flaps and slats of the said aircraft are in a clean configuration,

   the said first logic means (15) delivering at their output (15.4) a signal representative of the presence of vertical wind gusts.

3. Operating device according to Claim 2, **characterized in that** the said detection device (5) comprises derivation means (6, 7) receiving signals representative of the current attitude ($\theta$) and of the current angle of attack ($\alpha$) and delivering at their output the said first derivatives ($\dot{\alpha}$ and $\dot{\theta}$).

4. Operating device according to one of Claims 2 and 3, **characterized in that** the said detection device (5) comprises,

   - third comparison means (11) for comparing the said absolute value with a threshold (Si) lower than the said higher threshold (Ss) and for delivering a signal if the said absolute value is lower than the said lower threshold (Si); and
   - second logic means (14) interposed between the said first comparison means (10) and the said first logic means (15), the said second logic means (14) receiving at their inputs the said signals (d) and (a) resulting from the comparisons of the said absolute value with the said thresholds and delivering to the said second logic means (15):

     . either no signal, if the said signal (a) resulting from the comparison of the said absolute value with the said lower threshold exists;
     . or the said signal (d) resulting from the comparison of the said absolute value with the said higher threshold, as long as the said absolute value $|\dot{\alpha} - \dot{\theta}|$ is higher than the said lower threshold (Si).

5. Operating device according to Claim 4, **characterized in that**, when the said absolute value passes from a value higher to a value lower than the said higher threshold (Ss), the said second logic means (14) maintain the said signal representative of the presence of a vertical wind gust until the said absolute value becomes lower than the said lower threshold (Si), for as long as:

- the said current Mach number is higher than the said Mach number threshold; and
- the aerodynamic flaps and slats of the said aircraft are in a clean configuration.

6. Operating device according to any one of Claims 1 to 5,
   **characterized in that** the said detection device (5) comprises means (9) for filtering the said absolute value $|\dot{\alpha} - \dot{\theta}|$.

7. Operating device according to any one of Claims 1 to 6,
   **characterized in that** the said higher threshold (Ss) is at least approximately equal to 1°/s.

8. Operating device according to any one of Claims 4 to 6,
   **characterized in that** the said lower threshold (Si) is at least approximately equal to 0.5°/s.

9. Operating device according to one of Claims 1 to 8,
   **characterized in that** means (12) subordinate the generation of the said electrical signal of presence of vertical wind gusts to the fact that the said absolute value is higher than the said higher threshold for at least a first determined duration.

10. Operating device according to one of claims 4 to 9,
    **characterized in that** means (13) subordinate the maintaining of the said electrical signal representative of the presence of a vertical wind gust to the fact that the said absolute value is lower than the said lower threshold for at least a second predetermined duration.

FIG.1

# FIG.2

EP 1 004 951 B1

FIG. 3